# EUROPEAN PATENT SPECIFICATION

(11) **EP 1 146 711 B1**
(45) Date of publication and mention of the grant of the patent: **13.09.2006**
(21) Application number: 00107854.2
(22) Date of filing: 12.04.2000
(51) Int. Cl.: H04L 29/06

(54) **Firewall parser architecture for a given protocol**
Feuerschutzwandsarchitektursparser für ein gegebene protokoll
Analyseur d'une architectuer de coupe-feu pour un certain protocole

(43) Date of publication of application: 17.10.2001
(73) Proprietor: Tenovis GmbH & Co. KG, 60362 Frankfurt (DE)
(72) Inventor: Schlesinger, Jürgen, 64572 Buettelborn (DE); Rohrdrommel, Dieter, 63477 Maintal (DE); Ackermann, Ralf, 64291 Darmstadt (DE); Roedig, Utz, 64283. Darmstadt (DE); Steinmetz,Ralf, 64342 Seehein-Jungenheim (DE)
(74) Representative: Tergau & Pohl Patentanwälte

(56) References cited:
- EP-A- 0 743 777
- EP-A- 0 854 621
- EP-A- 0 858 201
- LODIN S W ET AL: "FIREWALLS FEND OFF INVASIONS FROM THE NET" IEEE SPECTRUM,IEEE INC. NEW YORK,US, vol. 35, no. 2, 1 February 1998 (1998-02-01), pages 26-34, XP000768657 ISSN: 0018-9235
- DALGIC I ET AL: "COMPARISON OF H.323 AND SIP FOR IP TELEPHONY SIGNALING" PROCEEDINGS OF THE SPIE, 1999, XP000949839
- TOGA J ET AL: "ITU-T STANDARDIZATION ACTIVITIES FOR INTERACTIVE MULTIMEDIA COMMUNICATIONS ON PACKET-BASED NETWORKS: H.323 AND RELATED RECOMMENDATIONS" COMPUTER NETWORKS AND ISDN SYSTEMS,NL,NORTH HOLLAND PUBLISHING. AMSTERDAM, vol. 31, no. 3, 11 February 1999 (1999-02-11), pages 205-223, XP000700319 ISSN: 0169-7552

## Description

### Background of the invention

The invention relates to a firewall parser architecture for a given protocol, such as an IP-telephony protocol.

### Description of the related art

Firewalls are a well established security mechanism for providing access control and auditing at the borders between different administrative network domains. Their basic architecture, techniques and operation modes did not change fundamentally during the last years.

On the other side new challenges emerge rapidly when new innovative application domains have to be supported. IP-telephony applications are considered to have a huge economic potential in the near future. For their widespread acceptance and thereby their economic success they must cope with established security policies. Existing firewalls face immense problems here, if they - as it still happens quite often - try to handle the new challenges in a way they did with "traditional applications". IP-telephony applications differ from traditional applications in many aspects, which makes such an approach quite inadequate.

A filter parser component communicating with a firewall according to the first part of claim 1 of the present invention is disclosed in EP 0 854 621 A1.

### Summary of the Invention

It is an object of the present invention to provide a firewall parser architecture, as claimed in claim 1, for a given protocol such as an IP-telepony protocol, which is more flexible than existing architectures and which can support SIP (Session Initiation Protocol) or H.323 scenarios. Both protocol types can even be used together with appropriate gateways. With the features of claim 1 the parser component can communicate with the firewall as before and seperately with components which operate the given protocol independently of the firewall.

According to the features of claim 2 the parser component can be loaded dynamically and configured seperately with a dedicated configuration language independent from the firewall. This enables according to claim 4 a support for changing H.323 or SIP scenarios and components.

With the generic interface according to claim 3 an adaption of generic firewall commands for a specific firewall is possible.

According to claim 5 NAT (Network Address Translation) scenarios like calls to terminals in "hidden" networks can be supported.

With the data interface of claim 6 it is possible to redirect the media and control streams of external data sources to the parser.

Through the generic interface coupling of remote firewall or firewall components to the specific firewall can be achieved.

### Description of the drawings

Figure 1 shows an integrated protocol parser commonly used,
Figure 2 shows an external protocol parser according to the invention.

### Description of preferred embodiments

Before discussing the details of the invention reference is made to state of art solutions and definitions which will be used later for describing the firewall parser architecture of the invention.

### IP-telephony

IP-telephony is used to establish a conversation comparable to a classic telephone call using an IP infrastructure. Such a conversation is widely known under "Voice over IP". Typical applications and scenarios are currently based on different protocol suites. At the moment there are two main approaches - the H.323 standard (1) protocol family and the Session Initiation Protocol SIP (2) with a changing distribution and relevance. Though today, a high percentage of applications and scenarios is still H.323 based, it is supposed that in the near future the use of the SIP protocol may increase (3). Both protocol types will even be usable together with appropriate gateways.

### Firewalls

Within a global networked environment, security aspects have become more and more important and access control at network borders is considered essential. Therefore, most organziations replaced their simple internet routers by firewalls.

These firewalls consist of packet filters, "stateful filters", proxies or a combination of all these. A firewall examines all network traffic between the connected networks. Only packets that are explicitly allowed to (as specified by a security policy) are able to pass through (4),(5). In addition to the inspection of data flows, some firewalls also hide the internal network stucture of an organization. From the Internet the only visible and therefore attackable network system is the firewall. This is achieved by the use of proxy functionality or a Network Address Translation (NAT) mechanism.

To perform their observation tasks, the firewall components (filters, stateful filters, proxies) need to interoperate with a special component for the services (e.g. IP-telephony) they want to support. In the following such a component is referred to as a parser because it parses and analyzes data. Based on the analysis of the traffic, the firewall decides whether packets my be passed through. A parser may also interact with NAT or proxy components since it extracts information that can be modified or used for forwarding to them.

As stated the task of traffic observation within the firewall FW is performed by a parser PS. Commonly used firewalls use static and integrated protocol parsers. These parsers are often written in a firewall specific language. Usually they are compiled in advance and then linked into or statically loaded into the firewall.

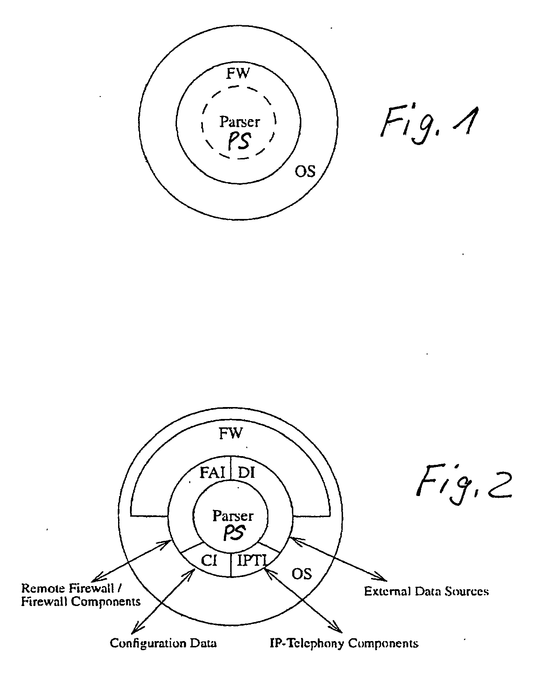

The parser(s) may interact with the firewall, request data streams for analysis and reconfigure the overall system based on the inspection results. A sytem of this type is shown in Figure 1.

Figure 1 shows a H. 323 parser PS which is directly embedded (as other parsers for other protocols may be too) in the firewall FW itself. The firewall relies on and uses functions of the Operating System OS of the firewall host. IP-Telephony data streams are passed to the firewall components, e.g. by configuring OS specific sockets/packet filters, and the parser within the firewall is responsible for analyzing them.

A "parser as integral part of the firewall" approach works very well with common applications, but with IP-Telephony applications it does not. The following reasons cause this fact:
- Different communnication mechanism:
   Different parsers are necessary for every type of H.323 scenario. If the scenario is changed only slightly, the parser can often not be adjusted to the new requirements and a new parser become necessary. Static and embedded parsers are not able to adapt to the described complex scenarios.
- Network Address Translation (NAT):
   The parser can only communicate with the firewall, but not with other components. A connection to other components is necessary to successfully enable use of NAT.

A commonly used internal firewall architecture as shown in Figure 1 is not comprehensive nor satisfying for IP-Telepony scenarios. Various vendors recognized this and implemented/proposed other architectures. These - up to now - may handle parts of the IP-Telephony problem domain. A general solution for all of the problems is not available yet. That is why the invention introduces a new parser architecture which is explicitly targeted to solve problems in SIP and H. 323 scenarios, while being extendable for future scenarios as well.

According to the invention the parser PS is placed outside the conventional firewall core as shown in Figure 2. This allows the parser component PS to communnicate with IP-Telephony components. As as consequence many NAT scenarios like calls to terminals in "hidden" networks can be supported.

Additionally the parser component PS can be loaded dynamically and configured separately with a dedicated configuration language independent from the firewall FW by using the configuration interface CI. This enables a support for changing H. 323 or SIP scenarios and components.

The design considerations directly influence the architectural strategy. To be able to move the parser out of the firewall core, an interface is necessary. It allows the parser to interact with the firewall system as it did before when it was an integral part of it.

In order to re-use the parser component with different firewall types or firewalls from different vendors a generic interface is made available by the invention. This firewall adaption interface FAI is responsible for mapping the generic firewall commands generated by a dedicated H. 323 or SIP parser to commands that are understandable for a specific firewall. That way this firewall gets additional functionality. The generic interface is responsible for informing the firewall, which connections are negotiated and should be passed through or should be redirected to a specific firewall filter or proxy.

To redirect the media and control data streams to the parser another additional so called data interface DI is introduced. The architecture according to the invention allows to dedicatedly choose the internal source of the observable and modifiable data and to forward it to the appropriate point for processing.

External components have to be interfaced to the system as well. The IP-Telephony H. 323/SIP interface IPTI is used for that. It maps generic requests provided by the parser component to the protocol language and protocol data unit PDU layout of the special connected components. Specific DNS, LDAP and/or Gatekeeper request that differ for each of the supported IP-Telephony protocols and applications can be mapped to the generic and stable internal format that way.

This approach enables firewalls for IP telephony. The architecture definitely allows for a variety of additional benefits. The new features is the exchangeability and adaptablility of the parser to dedicated scenarios. The described flexible approach covers different IP-Telephony signaling protocol as well as heterogenous scenarios. For each of those the IP-Telephony parser can be adapted without having to change the overall structure of the system or having to replace other components. This allows for the protection of the investments in existing network and firewall equipment.

### References

(1) ITU: ITU-T Recommendation H.232, Packet-Based Mulitmedia Communication Systems, 1998
(2) M. Handley, H. Schulzrinne, E. Schooler, J. Rosenberg: RFC 2543 SIP: Session Initiation Protocol, March 1999
(3) Douskalis, B.: IP Telephony - The Integration of Robust VoIP Services, Prentice Hall, 2000
(4) Chapman, D.B.: Building Internet Firewalls, O'Reilly, Cambridge, 1995
(5) Cheswick, W. R., Bellovin S.M: Firewalls and Internet Security, Addison Wesley, 1994

## Claims

1. Firewall parser architecture for a give protocol, such as an IP-telephony protocol, comprising a parser component (PS) which has interfaces (FAI, DI) allowing the parser component (PS) at least to communicate with a firewall (FW), **characterized in that** the parser component (PS) is placed outside the firewall (FW) core and the parser component (PS) has further interfaces (CI, IPTI) via which the parser component (PS) is adapted to communicate separately with external components which operate the given protocol independently of the firewall (FW).

2. Firewall parser architecture according to claim 1, **characterized by** the parser component (PS) having a configuration interface (CI) via which the parser component (PS) can be loaded dynamically and configured separately and independent from the firewall.

3. Firewall parser architecture according to one of the claims 1 or 2, **characterized by** the parser component (PS) comprising a generic interface (FAI) adapted to map generic firewall commands generated by the parser component (PS) to commands that are understandable by a specific firewall (FW) connected to the parser component (PS).

4. Firewall parser architecture according to one of the claims 1 to 3, **characterized by** the parser component (PS) comprising a further interface (IPTI) via which the parser component (PS) is coupled to external components supporting the H.323 or SIP standards, this interface being adapted to map generic requests provided by the parser component (PS) to the protocol language and protocol data unit (PDU) layout of these connected external components.

5. Firewall parser architecture according to one of claims 1 to 4 **characterized by** the parser component (PS) being adapted to support NAT scenarios.

6. Firewall parser architecture according to one of claims 1 to 5 **characterized by** the parser component (PS) having a data interface (DI) adapted to redirect the media and control streams of external components to the parser component (PS).

7. Firewall parser architecture according to one of claims 3 to 6 **characterized by** the parser component (PS) further comprising a generic interface (FAI) adapted to couple the parser component (PS) to a remote firewall or firewall components.

## Patentansprüche

1. Firewall-Parser-Architektur für ein gegebenes Protokoll, insbesondere ein Protokoll für IP-Telefonie, umfassend eine Parser-Komponente (PS), die Schnittstellen (FAI, DI) besitzt, welche es der Parser-Komponente (PS) ermöglichen, zumindest mit einer Firewall (FW) zu kommunizieren, **dadurch gekennzeichnet, dass** die Parser-Komponente außerhalb des Kerns der Firewall (FW) angeordnet ist, und dass die Parser-Komponente (PS) weitere Schnittstellen (CI, IPTI) besitzt, durch die die Parser-Komponente (PS) dafür ausgelegt ist, gesondert mit externen Komponenten zu kommunizieren, die das gegebene Protokoll unabhängig von der Firewall (FW) ausführen.

2. Firewall-Parser-Architektur nach Anspruch 1, **dadurch gekennzeichnet, dass** die Parser-Komponente (PS) eine Konfigurationsschnittstelle (CI) aufweist, durch die die Parser-Komponente (PS) dynamisch geladen und getrennt und unabhängig von der Firewall konfiguriert werden kann.

3. Firewall-Parser-Architektur nach Anspruch 1 oder 2, **dadurch gekennzeichnet, dass** die Parser-Komponente eine generische Schnittstelle (FAI) umfasst, die dafür ausgelegt ist, generische Firewall-Befehle, die durch die Parser-Komponente (PS) erzeugt werden, auf Befehle abzubilden, die von einer mit der Parser-Komponente (PS) verbundenen spezifischen Firewall (FW) verstanden werden.

4. Firewall-Parser-Architektur nach einem der Ansprüche 1 bis 3, **dadurch gekennzeichnet, dass** die Parser-Komponente (PS) eine weitere Schnittstelle (IPTI) aufweist, durch die die Parser-Komponente (PS) an externe Komponenten, die den H.323 oder den SIP Standard unterstützen, angekoppelt ist, wobei diese Schnittstelle dafür ausgelegt ist, generische Anforderungen der Parser-Komponente (PS) auf die Protokollsprache und auf das Layout der Protokolldateneinheit (PDU) der verbundenen externen Komponenten abzubilden.

5. Firewall-Parser-Architektur nach einem der Ansprüche 1 bis 4, **dadurch gekennzeichnet, dass** die Parser-Komponente (PS) derart ausgelegt ist, dass sie NAT Szenarien unterstützt.

6. Firewall-Parser-Architektur nach einem der Ansprüche 1 bis 5, **dadurch gekennzeichnet, dass** die Parser-Komponente (PS) eine Datenschnittstelle (DI) aufweist, die dafür ausgelegt ist, die Medien- und Steuerströme von externen Komponenten an die Parser-Komponente (PS) umzuleiten.

7. Firewall-Parser-Architektur nach einem der Ansprüche 3 bis 6, **dadurch gekennzeichnet, dass** die Parser-Komponente (PS) weiterhin eine generische Schnittstelle (FAI) aufweist, die dafür ausgelegt ist, die Parser-Komponente (PS) an eine entfernt liegende Firewall oder an Firewall-Komponenten anzukoppeln.

## Revendications

1. Architecture d'analyseur de coupe-feu pour un protocole donné, tel qu'un protocole de téléphonie IP, comprenant un composant (PS) d'analyseur qui a des interfaces (FAI, DI) permettant au composant (PS) d'analyseur de communiquer au moins avec un coupe-feu (FW), **caractérisé en ce que** le composant (PS) d'analyseur est placé à l'extérieur de l'âme du coupe-feu (FW) et le composant (PS) d'analyseur a en outre des interfaces (CI, IPTI) par lesquelles le composant (PS) d'analyseur est conçu pour communiquer séparément avec des composants extérieurs qui font fonctionner le protocole donné indépendamment du coupe-feu (FW).

2. Architecture d'analyseur de coupe-feu suivant la revendication 1, **caractérisée en ce que** le composant (PS) d'analyseur a une interface (CI) de configuration par laquelle le composant (PS) d'analyseur peut être chargé dynamiquement et configuré séparément et indépendamment du coupe-feu.

3. Architecture d'analyseur de coupe-feu suivant l'une des revendications 1 ou 2, **caractérisée en ce que** le composant (PS) d'analyseur comprend une interface (FAI) générique conçue pour éditer des commandes génériques de pare-feu produites par le composant (PS) d'analyseur en des commandes qui sont compréhensibles par le pare-feu (FW) spécifique relié au composant (PS) d'analyseur.

4. Architecture d'analyseur de coupe-feu suivant l'une des revendications 1 à 3, **caractérisée en ce que** le composant (PS) d'analyseur comprend une autre_ interface (IPTI) par laquelle le composant (PS) d'analyseur est couplé à des composants extérieurs supportant les normes H.323 ou SIP, cette interface étant conçue pour éditer des requêtes génériques fournies par le composant (PS) d'analyseur à la topologie d'unité (PDU) de langage de protocole et de données de protocole de ces composants extérieurs connectés.

5. Architecture d'analyseur de coupe-feu suivant l'une des revendications 1 à 4, **caractérisé en ce que** le composant (PS) d'analyseur est conçu pour supporter des scénario (NAT) extérieurs.

6. Architecture d'analyseur de coupe-feu suivant l'une des revendications 1 à 5, **caractérisée en ce que** le composant (PS) d'analyseur a une interface (DI) de données conçue pour rediriger les courants de support et de commande de composants extérieurs au composant (PS) d'analyseur.

7. Architecture d'analyseur de coupe-feu suivant l'une des revendications 3 à 6, **caractérisé en ce que** le composant (PS) d'analyseur comprend en outre une interface (FAI) générique conçue pour coupler le composant (PS) d'analyseur à un coupe-feu ou à des composants de coupe-feu éloigné.
